Europäisches Patentamt

(19) European Patent Office  (11) Publication number: **0 088 410**

Office européen des brevets  **B1**

(12)  **EUROPEAN PATENT SPECIFICATION**

(45) Date of publication of patent specification: **27.08.86**  (51) Int. Cl.⁴: **G 02 B 6/38**

(21) Application number: **83102166.2**

(22) Date of filing: **04.03.83**

(54) **Optical fiber connectors.**

(30) Priority: **05.03.82 JP 34705/82**

(43) Date of publication of application:
**14.09.83 Bulletin 83/37**

(45) Publication of the grant of the patent:
**27.08.86 Bulletin 86/35**

(84) Designated Contracting States:
**DE FR GB**

(56) References cited:
**GB-A-2 080 562**
**US-A-4 181 400**

**IEEE JOURNAL OF QUANTUM ELECTRONICS,
vol. QE-16, no. 6, June 1980 K. NAWATA
"Multimode and single-mode fiber connectors
technology, pages 618-627**

(73) Proprietor: **NEC CORPORATION
33-1, Shiba 5-chome, Minato-ku
Tokyo 108 (JP)**

(72) Inventor: **Morimoto, Yoshitaka
c/o Nippon Electric Co., Ltd. 33-1, Shiba
Gochome
Minato-ku Tokyo (JP)**

(74) Representative: **Vossius Vossius Tauchner
Heunemann Rauh
Siebertstrasse 4 P.O. Box 86 07 67
D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention generally relates to a connector and, more specifically, to an optical fiber connector for coupling a pair of single optical fibers.

With the improvement of optical fibers, in particular the reduction of transmission loss, Fresnel reflection caused on an optical fiber end surface in an optical fiber connector has been becoming a critical factor for the determination of the transmission quality in optical communication systems. More particularly, the feedback of reflected light to a laser diode makes oscillation characteristics unstable and reflected light returns to a light receiving element again to deteriorate S/N.

In order to avoid Fresnel reflection, several solutions have heretofore been proposed; (1) an index matching agent is inserted between the end surfaces of two optical fibers; (2) the end surfaces of the optical fibers are coated with a non-reflecting film (Jap. Utility Model Application Laid-open JP—U—56—88217); and (3) either the end surfaces of the optical fibers or the end surfaces of the ferrules are inclined to make a reflection angle larger than a critical angle depending on the refractive indices of the core and cladding of the optical fibers so as to leak the light (refer to Jap. Patent Application Laid-open JP—A—53—149346 and JP—A—54—150142). The index matching agent and the non-reflection coating aim at reducing reflection per se while the slant configuration of the end surfaces intends to prevent back-propagation of reflected light.

The first means, however, lacks reliability, and is inconvenient in mating and/or unmating. The second means is defective in that it is practically impossible to lower the refractive index of the coated films to less than 1%, and in that such coating might be peeled off when fibers are coupled in abutment. The third means is also disadvantageous in that the end surfaces of the fibers must be bevelled accurately with a particular angle and, further at the time of mating of the two fibers, the end surface of each fiber should be accurately aligned anglewise.

The GB—A—2 080 562 discloses a coupling having two connecting elements for connecting two optical fibres obliquely disposed therein with respect to the connecting axis, while the front end faces of the fibres and the connecting elements are orthogonal to said connecting axis. The coupled end faces are made oblique to the long axis of the fibres to develop an enlarged coupling surface in order to facilitate the axial alignment of the fibres.

However, this principle is applied for a purpose different from that of the present invention.

The principal object of the present invention is to provide a novel structure of an optical fiber connector which can obviate problems heretofore encountered in prior art, particularly preventing back-propagation of the reflected light.

According to the invention, an optical fiber connector assembly for coupling a pair of single optical fibers in an aligned position comprises:

a) a first and a second ferrule each provided with a through-hole for receiving the end of a single optical fiber, the fibers being so positioned in the corresponding ferrules that the fiber end faces and the ferrule front end faces are coplanar, and

b) a receptacle body guiding said first and second ferrules, which are positioned within said body so that the front flat end faces of said ferrules contact each other and the axes of the fiber ends lie on a common axis, whereby the overall arrangement is so designed that the fibre end faces are inclined with respect to their optical axes in a manner such that the part of light which is reflected at the connecting interface is prevented from being backwardly propagated inside the fibers by enabling it to escape outside said fibers, and is characterized in that

c) the through-hole of each of the first and the second ferrules comprises a first bore extending a certain distance from the front flat end face of said ferrule towards a rear end of said ferrule along a slanted axis with a predetermined inclination angle to the ferrule axis and a second bore extending rearwardly from said first bore, said first bore being shaped and dimensioned to permit a stripped end of a single optical fiber to be positioned within said first bore,

d) the front end faces of the fibers and ferrules are orthogonal to the ferrule axis,

e) the inclination angle of the slanted axis of said first bore with respect to the ferrule axis is so set that the part of light which is reflected at the connecting surface escapes outside the fibers and·

f) the first and second ferrules are angularly displaced by 180° with respect to each other within said receptacle body so that axes of said stripped ends of said single optical fibers of said first and second ferrules are on a common axis.

According to the present invention, the end surfaces of the two ferrules are constructed perpendicular to the axes thereof, the two fibers are arranged in a manner that their axes are inclined with respect to the, ferrule axes, and the ferrule end surfaces are made to contact and the axes of the two fibers are made to form a straight line, thereby facilitating positional alignment of the ferrules and grinding of the ends as well as effectively preventing the feedback which otherwise would be caused by Fresnel reflection.

Figures 1 through 3 are schematic cross sectional views of prior art optical fiber connectors.

Figure 4 is a schematic cross sectional view of a first embodiment of the optical fibre connector according to the present invention.

Figure 5 is a cross section to explain the principle of the present invention.

Figure 6 is a cross sectional view of a second embodiment of the optical fiber connector according to the present invention.

Figure 7 is a perspective view of an adaptor to be used for the embodiment in Figure 6.

Figure 8 is a cross sectional view of a plug to be used in the embodiment shown in Figure 6.

Figure 9 is a partially exploded perspective view of the plug of Figure 8.

Figure 10 is a cross sectional view to show the details of coupling between optical fibers.

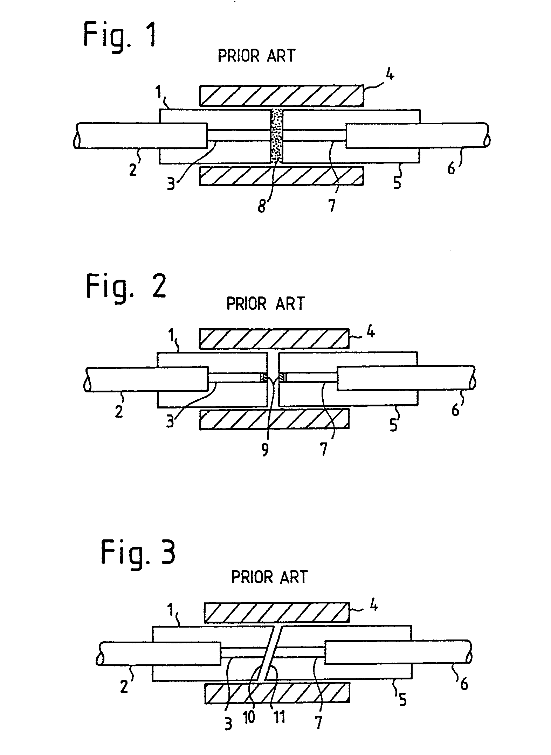

In the prior art optical fiber connector shown in Figure 1, fibers 3 and 7 which are stripped of claddings 2 and 6 are held by ferrules 1 and 5, and the ferrules 1 and 5 are inserted into a hole on a guide sleeve 4. An index matching agent 8 is filled between the ferrules. In such a structure, dusts become easily adhered at the time of mating/unmating, presenting difficulties in maintenance as it requires frequent cleansing and additional feeding of an index matching agent. The structure lacks long term reliability as leakage and chemical changes of the agent might occur.

The second example of the prior art shown in Figure 2 aims at suppressing reflection by coating the fiber ends with a non-reflection coating agent 9. Although the non-reflection coating agent 9 can theoretically prevent reflection, coating materials presently available cannot reduce the refractive index to 1% or less. The coating might peel off when fibers are abutted for connection.

The third prior art structure shown in Figure 3 is structured in such a manner that the end surfaces 10 and 11 of the ferrules 1 and 5 and the optical fiber end surfaces are bevelled accurately so as to leak the light reflected from the fiber end surfaces. Although such structure can leak reflected light, angular alignment between the pair of ferrules or fibers is difficult and a slight misalignment which causes line contact, not surface contact, in engagement might damage the fiber end surfaces when the ferrules are frequently mated/unmated. It also requires special jigs and tools for in situ assembling of cable laying construction.

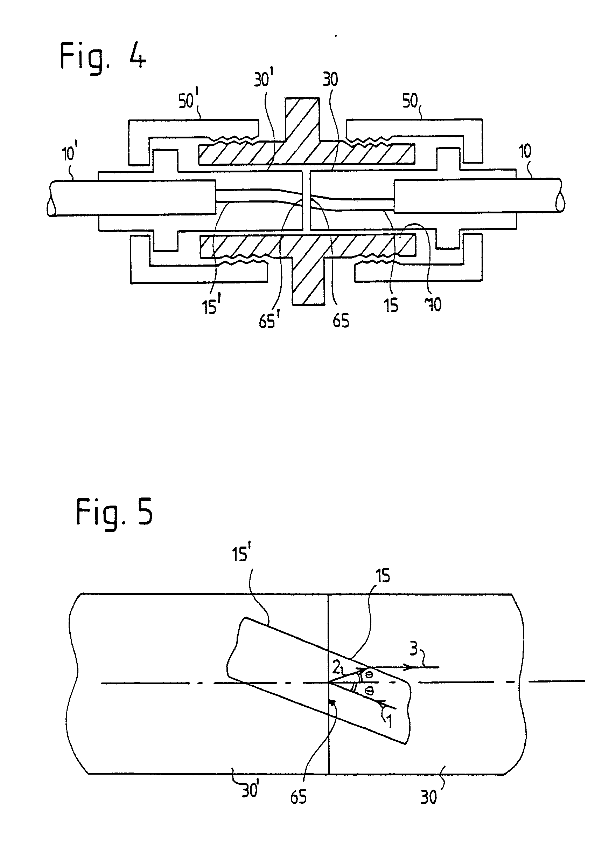

In Figure 4 the first embodiment of the optical fiber connector according to this invention includes two ferrules 30, 30' which respectively hold optical fibers 15, 15' therein, and coupling nuts 50, 50'.which fix the two ferrules 30, 30' on a receptacle body 70. The ferrule 30 is formed with a first hole extending obliquely with respect to the ferrule axis from the center of a front end surface 65, of said ferrule 30 which is perpendicular to the ferrule axis. A second hole is bored parallel to the ferrule axis to communicate with the first hole. A third hole having a diameter larger than that of the second hole is further provided. Fiber tip 15 from which the cladding 10 has been stripped off is inserted into the slanted first hole from the opening of the third hole. Then the fiber tip end is grounded together with the ferrule end surface 65, thus forming a coplanar surface perpendicular to the ferrule axis. Ferrule 30' has a similar construction, and is located in a position rotated by 180° from the ferrule 30 so that the axes of the two fibers 15 and 15' are arranged in a line, which line forms a certain angle with respect to the ferrule axis when the two end surfaces 65, 65' of the two ferrules 30, 30' are snugly mated inside the receptacle body 20.

Referring now to Figure 5, the light 1 which has passed the fiber 15 is partially reflected (Fresnel reflection) on the fiber end surface 65.

However, if the inclination angle θ (which is equal to the incident angle) of the fiber with respect to the ferrule axis is set greater than a critical angle

$$\theta_c = \frac{1}{2} \arc \sin \sqrt{1 - \left( \frac{n_2}{n_1} \right)^2} \quad (1),$$

wherein $n_1$ and $n_2$ ($<n_1$) denote the refractive indices of the core and cladding of the fiber, respectively, the reflected light will become a leak light 3 and will not return to inside the fiber.

Referring back to Figure 4, as the ferrule end surfaces and the fiber end surfaces are perpendicular to the ferrule axis, and as the fibers 15, 15' are fixed to the ferrules 30, 30', the end surfaces are easily finished by grinding and there are no problems for in situ assembling. As the surface pressure exerted on the pair of ferrules 30, 30' to be connected is uniform, it will not damage the fibers. The interstitial space between the fibers is maintained constantly at zero or almost zero, thereby enabling stable and secure connection.

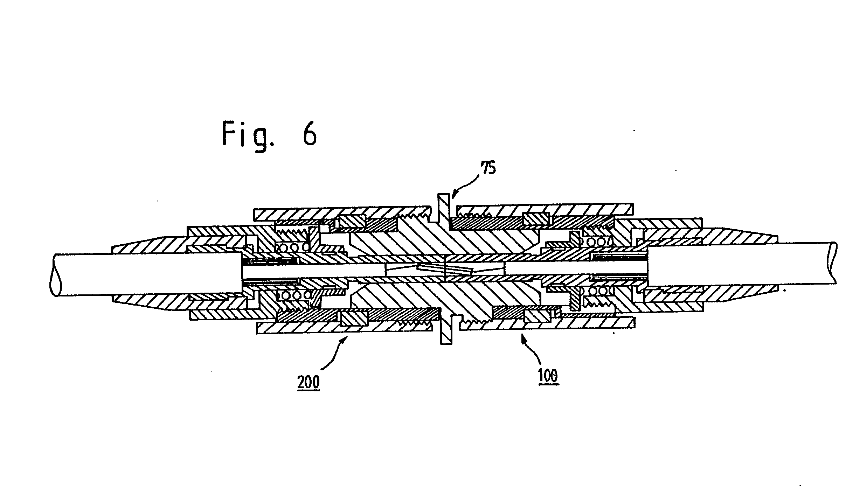

In Figure 6, the optical connector of a further embodiment of the present invention includes an adaptor 75, and a pair of plugs 100, 200 which are coupled from both sides with the adaptor 75.

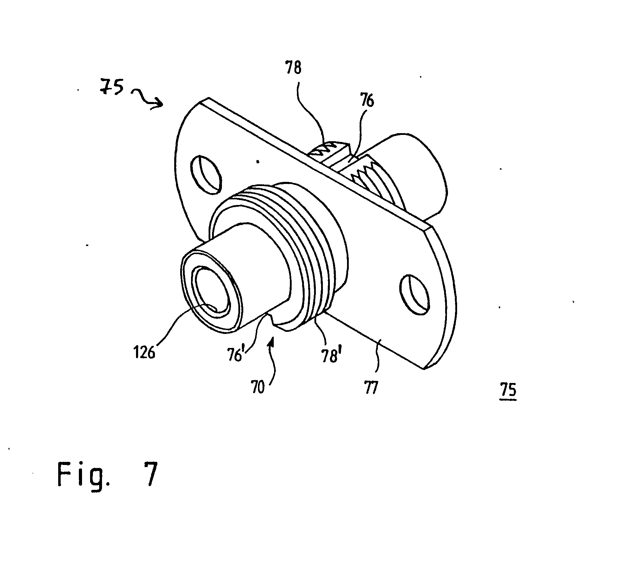

As shown in Figure 7, the adaptor 75 comprises a receptacle body 70 mounted on a flange 77, said body 70 having an axial bore 126 of uniform inner diameter and external threaded portions 78, 78'. The threaded portions 78, 78' are so positioned that longitudinal grooves 76, 76' which are parallel to the axial direction will become symmetrical to each other with respect to the point where the axis and the flange cross each other. The longitudinal grooves 76, 76' therefore are provided in a direction angularly displaced by 180° from each other, on the outer periphery of the receptacle body.

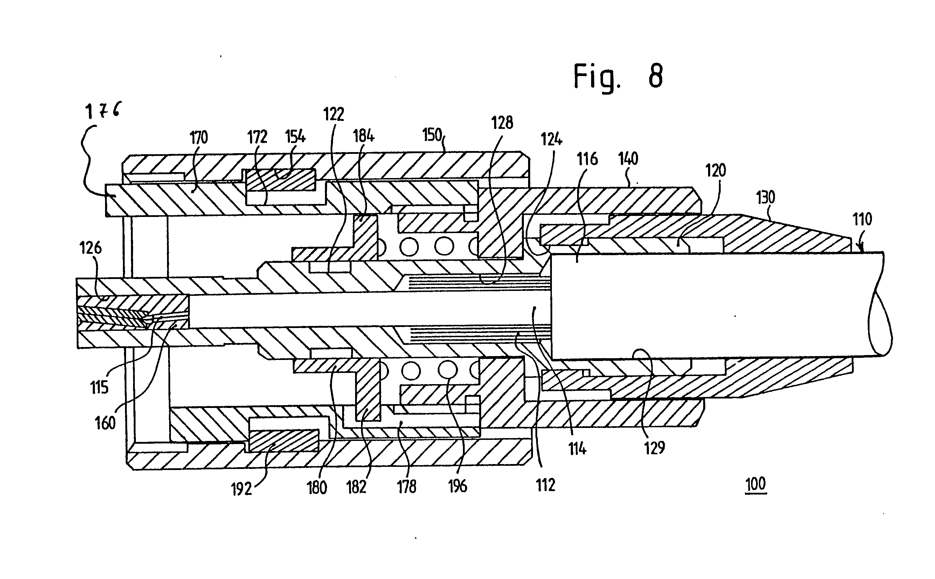

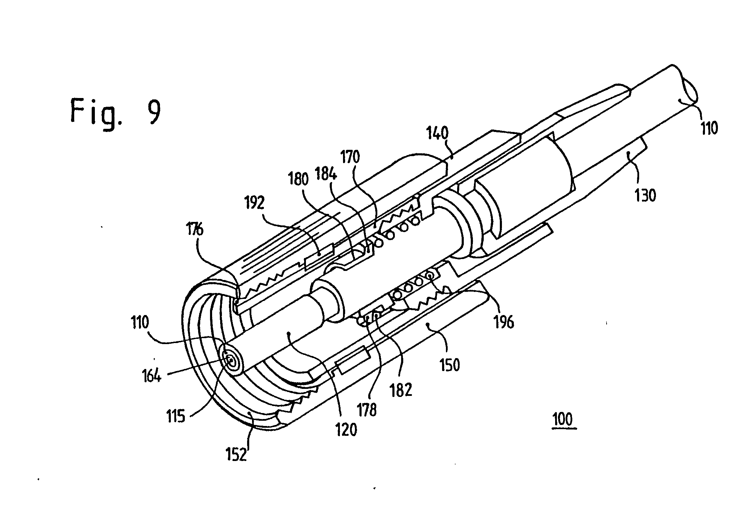

In Figures 8 and 9, the plug 100 includes a ferrule 120, a support body 170 for housing the ferrule, a stop nut 140 for fixing the ferrule on the support body, and a coupling nut 150 to be coupled with the support body via a retainer 192 for connection with the adaptor 175. The optical fiber cable 110 comprises, from the core outward, a single optical fiber 115, a nylon cladding 114 which acts as a protective jacket for the single strand 115, a tensile strength member 112, and an outer sheath 116 which is made of polyvinyl chloride and acts as a reinforcing member.

The ferrule 120 is of a hollow cylindrical configuration comprising, from frontwardly to rearwardly, a first hollow axial bore 126, a second hollow axial bore 128 of a larger diameter than that of the first bore 126, and a third hollow axial bore 129 of a larger diameter than that of the second bore 128. The ferrule 120 forms, on its external side, from the tip end in circumferential direction, a first annular groove 122 and a second annular groove 124. The ferrule includes a ring 180 which is fixed along the first annular groove 122. The ring 180 has a flange 184 a portion of which defines a projection 182. The first axial bore 126 of the ferrule includes a hollow cylindrical member 160 which determines the direction of the axis of a single fiber strand on the tip end thereof.

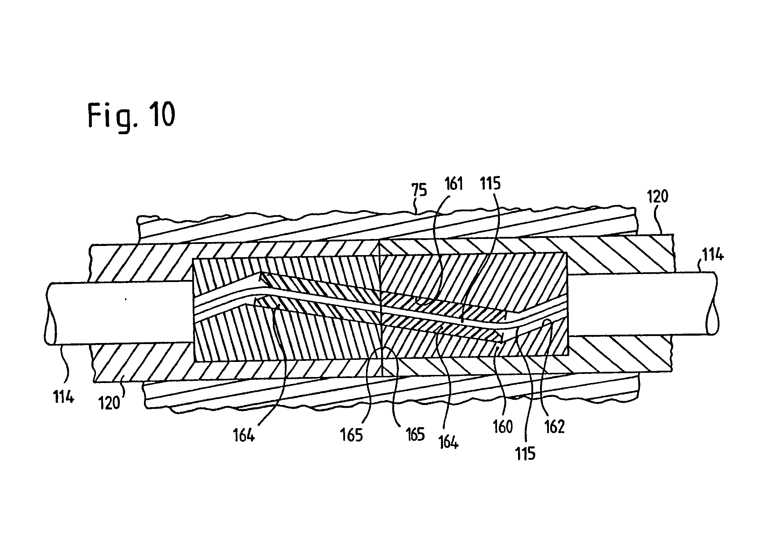

Referring now to Figure 10, the inside of the hollow cylindrical member 160 is formed with a first slanted bore 161 which has a uniform diameter and is inclined by 10° with respect to the center axis so that the tip end thereof is positioned at the center of the front end surface 165 of the member 160. A second slanted bore 162 extends from the center of the rear end of member 160 to communicate with the first slanted bore 161. A capillary 164 of a diameter substantially identical to that of the first slanted bore 161 is inserted from the front end 165 of the hollow cylindrical member 160 and secured.

Referring to Figures 8 and 9 again, the optical fiber cable 110 is processed to expose the single optical fiber strand 115 in the end section, the nylon cladding 114 in the first intermediate section and the tension member 111 in the second intermediate section. The optical fiber cable 110 so processed is inserted into the ferrule 120 so that its respective sections are positioned at the cylindrical member 160 in the first axial bore 126, and in the second and the third bores, respectively, and then are securely fixed. The optical fiber strand 115 goes through the second slanted bore 162 inside the cylindrical member 160 and reaches the capillary 164 which has an inner diameter substantially identical to that of the strand 115 to be fixed therein with an adhesive agent (Figure 10). The fiber tip end, the ferrule end surface and the cylindrical member end surface are ground to form a coplanar surface perpendicular to the central axis of the ferrule 120. A projected member of a rubber holder 130 fixed on the fiber cable 110 is engaged within the second annular groove 124. The rubber holder acts as a buffer against the bend of the cable.

The fiber cable thus assembled up to this stage. is mounted with a stop nut 140 from the tip end of the ferrule, which is then covered by a coil spring 196 and a ring 180. The ring 180 is caulked to the ferrule 120 on the first annular groove 122 in a manner such that the projection 182 of the flange 184 is aligned to the direction of the longer axis of the ellipse formed by the section of the slanted bore 161 on the ferrule end surface.

The support body 170 which is hollow and cylindrical has a hook 176 extending longitudinally and a guide groove 178 which is angularly displaced by 180° from the hook 176 and is arranged longitudinally along the inner wall of said body 170 in the direction opposite to the hook. An annular groove 172 is further provided on the outer periphery of the body 170. The ferrule 120 with the ring 180 is inserted along the inner wall of the support body 170 so as to cause the projection 182 of the ring 180 to engage with the guide groove 178. While pressing the spring coil 196 with the stop nut 140, the stop nut is coupled with a threaded portion provided inside the support body 170. A retainer 192 being resilient in the radial direction is pressed into the support body 170 for engagement. When a coupling nut 150 is placed over the support body 170 with the retainer 192, the retainer 192 is made to extend radially at the position of the internal annular groove 154 provided at the center of the axial bore inside the coupling nut 150 so as to couple both members 150 and 170 to allow the coupling nut 150 to freely revolve with respect to the support body 170. The plug 100 is made of such members and is assembled in such order as mentioned above.

The plug 100 thus assembled is coupled with the receptacle body 70 of the adaptor 75 as shown in Figure 7. If the hook 176 of the support body 170 is positionally aligned to engage with the axial groove 76 of the receptacle body 70, and the coupling nut 150 is revolved, the external threads 78 of the receptacle body 70 come to mate with the internal threads 152 of the coupling nut 150, thereby advancing the ferrule 120 in the axial direction.

As the plug 200 shown in Figure 6 is identical in structure with the plug 100, the description is omitted for simplification. Supposing respective components of the plug 200 are denoted by reference numerals identical with those used in Figures 8 and 9, the plug 200 is coupled with the adaptor 75 (Figure 7) as is explained below. When the hook 176 of the support body 170 of the plug 200 is engaged with the channel 76' of the receptacle body 70 and the coupling nut 150 is rotated, the internal threads of the coupling nut 150 come to mate with the external threads of the receptacle body 70 so as to advance the ferrule 120 of the plug 200 in the axial direction until it comes into contact with the end surface of the ferrule 120 of the other plug 100.

It is apparent that the axial direction of the fiber strands 115 which extend across the two end surfaces of the ferrules forms a single straight line in the connector constructed by assembling the two plugs 100 and 200 on the receptacle body 70. Since the fiber end surface is inclined with respect to the axis thereof, the component of the light which is reflected at one of the fiber end surfaces deviates from the axis in reflection according to Snell's law. If the fiber axis with respect to the ferrule axis is arranged on the fiber end surface at an angle $\theta$ greater than $\theta_c$ expressed in equation (1), then all of the reflected components are made to leak to outside of the fiber, thereby eliminating the light which might otherwise be propagated back through the fiber as the feedback in the incident direction.

In a modification, for example, the receptacle body 70 may include a sleeve or a guiding means therein to arrange the ferrules.

## Claims

1. An optical fiber connector assembly for coupling a pair of single optical fibers (15, 15'; 115) in an aligned position comprising:

a) a first and a second ferrule (30, 30'; 160) each provided with a through-hole for receiving the end of a single optical fiber, the fibers being so positioned in the corresponding ferrules that the fiber end faces and the ferrule front end faces are coplanar, and

b) a receptacle body (70) guiding said first and second ferrules, which are positioned within said body so that the front flat end faces of said ferrules contact each other and the axes of the fiber ends lie on a common axis, whereby the overall arrangement is so designed that the fibre end faces are inclined with respect to their optical axes in a manner such that the part of light which is reflected at the connecting interface is prevented from being backwardly propagated inside the fibers by enabling it to escape outside said fibers, characterized in that

c) the through-hole of each of the first and the second ferrules (30, 30'; 160) comprises a first bore extending a certain distance from the front flat end face (65, 65'; 165) of said ferrule towards a rear end of said ferrule along a slanted axis with a predetermined inclination angle to the ferrule axis and a second bore extending rearwardly from said first bore, said first bore being shaped and dimensioned to permit a stripped end of a single optical fiber (15, 15'; 115) to be positioned within said first bore,

d) the front end faces of the fibers and ferrules are orthogonal to the ferrule axis,

e) the inclination angle of the slanted axis of said first bore with respect to the ferrule axis is so set that the part of light which is reflected at the connecting surface escapes outside the fibers and

f) the first and second ferrules (30, 30'; 160) are angularly displaced by 180° with respect to each other within said receptacle body (70) so that the axes of said stripped ends of said single optical fibers (15, 15'; 115) of said first and second ferrules (30, 30'; 160) are on a common axis.

2. An optical fiber connector assembly according to claim 1, characterized in that said second bore of said through-hole of said ferrules is parallel to said ferrule axis.

## Patentansprüche

1. Stecker für optische Fasern zum Verbinden eines Paars einzelner optischer Fasern (15, 15'; 115) in ausgerichteter Lage, mit

a) einer ersten und einer zweiten Zwinge (30, 30'; 160), die jeweils mit einer Bohrung zur Aufnahme des Endes einer einzelnen optischen Faser versehen ist, wobei die Fasern in der entsprechenden Zwinge jeweils so angeordnet sind, daß die Endflächen der Fasern und die Vorderseiten der Zwingen copolanar sind, und mit

b) einem Behälter (70) als Führung für die erste und die zweite Zwinge, die innerhalb des Behälters derart angeordnet sind, daß die ebenen Vorderflächen der Zwingen einander berühren und die Achsen der Faserenden auf einer gemeinsamen Achse liegen, wobei die Gesamtanordnung so ausgebildet ist, daß die Endflächen der Fasern bezüglich ihren optischen Achsen so geneigt sind, daß der an der Übergangsfläche reflektierte Teil des Lichts durch Austritt aus den Fasern nicht in die Fasern zurückgeleitet werden kann, dadurch gekennzeichnet, daß

c) die Bohrung der ersten und der zweiten Zwinge (30, 30'; 160) eine erste Bohrung aufweist, die sich in einem bestimmten Abstand von der ebenen Vorderseite (65, 65'; 165) der Zwinge zur Rückseite der Zwinge entlang einer unter einem vorgegebenen Neigungswinkel zur Zwingenachse geneigten Achse erstreckt, und mit einer zweiten Bohrung, die sich von der ersten Bohrung nach hinten erstreckt, wobei die erste Bohrung so geformt und bemessen ist, daß ein freigelegtes Ende einer einzelnen optischen Faser (15, 15'; 115) innerhalb der ersten Bohrung positioniert werden kann,

d) die Vorderflächen der Fasern und der Zwingen senkrecht zur Zwingenachse sind,

e) der Neigungswinkel der geneigten Achse der ersten Bohrung gegenüber der Zwingenachse so eingestellt ist, daß der an der Übergangsfläche reflektierte Teil des Lichts die Fasern verläßt, und daß

f) die erste und die zweite Zwinge (30, 30'; 160) innerhalb des Behälters (70) gegeneinander um 180° verdreht sind, so daß die Achsen der freigelegten Enden der einzelnen optischen Fasern (15, 15'; 115) der ersten und der zweiten Zwinge (30, 30'; 160) auf einer gemeinsamen Achse liegen.

2. Stecker für optische Fasern nach Anspruch 1, dadurch gekennzeichnet, daß die zweite Bohrung der durchgehenden Borhung der Zwingen parallel zur Zwingenachse ist.

## Revendications

1. Connecteur pour fibres optiques destiné à accoupler une paire de fibres optiques uniques (15; 15'; 115) dans une position d'alignement comprenant:

a) des premier et second embouts (30, 30'; 160) présentant chacun un trou traversant pour recevoir l'extrémité d'une fibre optique unique, les fibres étant placées dans les embouts correspondants de façon que les faces extrêmes des fibres et les faces extrêmes antérieures des embouts soient dans le même plan; et

b) un corps de réceptacle (70) guidant les premier et second embouts, qui sont placés à l'intérieur du corps de façon que les faces extrêmes antérieures plates des embouts soient en contact l'une avec l'autre et que les axes des extrémités des fibres se trouvent sur un axe commun, d'où il résulte que l'agencement d'ensemble est conçu de façon que les faces extrêmes des fibres soient inclinées par rapport à leurs axes optiques, de telle sorte que la partie de la lumière qui est réfléchie au droit de l'interface de connexion ne puisse se propager vers l'arrière à l'intérieur des fibres en lui permettant de s'échapper à l'extérieur des fibres; caractérisé en ce que:

c) le trou traversant de chacun des premier et second embouts (30, 30'; 160) comprend un premier alésage s'étendant sur une certaine distance à partir de la face extrême antérieure plate (65, 65'; 165) de l'embout dans la direction de l'extrémité arrière de l'embout suivant un axe en pente avec un angle d'inclinaison prédéterminé par rapport à l'axe de l'embout et un second alésage s'étendant vers l'arrière à partir du premier alésage, le premier alésage étant façonné et dimensionné de manière à permettre à une extrémité dénudée d'une fibre optique unique (15; 15'; 115) d'être placée à l'intérieur du premier alésage;

d) les faces extrêmes antérieures des fibres et des embouts sont perpendiculaires à l'axe de l'embout;

e) l'angle d'inclinaison de l'axe en pente du premier alésage par rapport à l'axe de l'embout est réglé de façon que la partie de la lumière qui est réfléchie au droit de la surface de connexion s'échappe à l'intérieur des fibres; et

f) les premier et second embouts (30, 30'; 160) sont déplacés angulairement d'un angle de 180° l'un par rapport à l'autre à l'intérieur du corps de réceptacle (70) de façon que les axes des extrémités dénudées des fibres optiques uniques (15, 15'; 115) des premier et second embouts (30, 30', 160) se trouvent sur un axe commun.

2. Connecteur pour fibres optiques selon la revendication 1, caractérisé en ce que le second alésage du trou traversant des embouts est parallèle à l'axe des embouts.

Fig. 1

PRIOR ART

Fig. 2

PRIOR ART

Fig. 3

PRIOR ART

Fig. 4

Fig. 5

Fig. 6

0 088 410

Fig. 7

Fig. 8

0 088 410

Fig. 9

Fig. 10

0 088 410